# EUROPÄISCHE PATENTSCHRIFT

(11) **EP 1 731 846 B1**
(45) Veröffentlichungstag und Bekanntmachung des Hinweises auf die Patenterteilung: **08.08.2012**
(21) Anmeldenummer: 06010907.1
(22) Anmeldetag: 27.05.2006
(51) Int. Cl.: F24F 3/00, F24F 5/00, F24F 12/00

(54) **Einrichtung zur Belüftung und Beheizung von Gebäuden**
Ventilation and heating arrangement for buildings
Dispositif de chauffage et de ventilation pour bâtiments

(30) Priorität: 09.06.2005 AT 9782005
(43) Veröffentlichungstag der Anmeldung: 13.12.2006
(73) Patentinhaber: Drexel und Weiss Energieeffiziente Haustechniksysteme GmbH, 6960 Wolfurt (AT)
(72) Erfinder: Drexel, Christof, 6922 Wolfurt (DE)
(74) Vertreter: Hofmann, Ralf U.

(56) Entgegenhaltungen:
- WO-A-02/065026
- DE-A1- 10 249 562
- US-A1- 2002 017 107

## Beschreibung

Die Erfindung betrifft eine Einrichtung zur Belüftung und Beheizung von Gebäuden, insbesondere Wohnhäusern, mit einem Zuluft- und einem Abluft-Ventilator zur Förderung der in das Gebäude einzubringenden Zuluft und der aus dem Gebäude abzuführenden Abluft, einem Luft-Wärmetauscher zur Übertragung von Wärme von der Abluft auf die Zuluft und einer Wärmepumpe, die einen Kältemittelkreislauf für ein Kältemittel aufweist, welcher einen Verdampfer-Wärmetauscher, der einen Verdampfer für das Kältemittel bildet, einen Verdichter, mindestens einen Kondensator-Wärmetauscher, der einen Kondensator für das Kältemittel bildet, und ein Expansionsventil umfasst.

Eine Einrichtung der eingangs genannten Art ist bekannt und wird zur Belüftung, Beheizung und zur Erzeugung vom Warmwasser bei Passivhäusern eingesetzt. Passivhäuser sind extrem gut wärmegedämmte Gebäude, bei denen der Wärmebedarf 15 kWh/m²a nicht übersteigt und die Heizlast nicht über 10 W/m² liegt. Es kann bei solchen Passivhäusern ein herkömmliches Heizsystem entfallen und die erforderliche Wärmeeinbringung allein durch Nacherwärmung der Zuluft der kontrollierten Wohnraumbe- und -entlüftung erfolgen, nachdem diese Zuluft den Luft-Wärmetauscher passiert hat und von der Abluft erwärmt worden ist. Zur Vorerwärmung der Zuluft, bevor diese den Luft-Wärmetauscher durchströmt, wird die Zuluft bei kontrollierten Wohnraumbelüftungen meist durch einen im Erdreich verlegten Erdwärmekollektor geführt. Hierdurch wird die Lufttemperatur der Zuluft angehoben, so dass insgesamt die Energieeffizienz gesteigert wird und eine Vereisung des Luft-Wärmetauschers durch eine zu starke Abkühlung der Abluft verhindert wird. Im Sommer wird durch diesen Erdwärmetauscher eine gewisse, wenn auch geringe Abkühlung der Zuluft zur Kühlung des Gebäudes erreicht, wenn der Luft-Wärmetauscher durch einen Bypass umgangen wird.

Bei einer Einrichtung der eingangs genannten Art erfolgt die Nacherwärmung der Zuluft nach ihrem Durchströmen des Luft-Wärmetauschers mittel einer Wärmepumpe. Der Kältemittelkreislauf dieser Wärmepumpe verläuft hierbei durch einen Kondensator- Wärmetauscher, der den Kondensator bzw. einen der Kondensatoren für das Kältemittel bildet. Durch den anderen Kanal dieses Kondensator-Wärmetauschers ist die Zuluft geführt. Der Verdampfer der Wärmepumpe wird von einem Verdampfer-Wärmetauscher gebildet, durch dessen einen Kanal das Kältemittel geführt ist und durch dessen anderen Kanal die Abluft nach Verlassen des Luft-Wärmetauschers geführt wird. Von der Wärmepumpe wird somit Restwärme der Abluft ausgenützt, wobei das Temperaturniveau der Abluft nach ihrem Verlassen des Luft-Wärmetauschers insbesondere an sehr kalten Tagen, an denen ein höherer Heizwärmebedarf besteht, durch die Anhebung des Temperaturniveaus der Zuluft durch den Erdwärmetauscher ebenfalls angehoben worden ist. Es ist auch bereits bekannt bei dieser Einrichtung einen weiteren Kondensator-Wärmetauscher vorzusehen, der in einem Boiler angeordnet ist. Dadurch kann die Einrichtung zusätzlich zur Bereitung von Warmwasser eingesetzt werden.

Anlagen zum Belüften und Heizen von Räumen mittels frisch zugeführter Luft, die zur Rückgewinnung von Abwärme aus der Abluft über einen Kreuz-Wärmetauscher geführt wird, sind beispielsweise aus der WO 02/065026 A1, DE 199 38 019 A1, DE 103 23 287 A1, WO 99/13272 A1 und DE 3203 526 A1 bekannt. Diese Anlagen weisen darüber hinaus eine Wärmepumpe auf, mittels der Restwärme der Abluft auf die Frischluft übertragbar ist.

Die Einhaltung des Passivhausstandards kann allerdings nur durch umfassende Maßnahmen erreicht werden, die eine entsprechende Wärmedämmung, eine kompakte Bauweise mit einer nicht zu hohen Quadratmeterfläche pro Bewohner und ein entsprechendes Nutzerverhalten umfassen. Der überwiegende Teil an Wohngebäuden erreicht den Passivhausstandard nicht. Für Niedrigenergiehäuser werden teilweise ebenfalls kontrollierte Wohnraumbe- und -entlüftungsanlagen eingesetzt, insbesondere aus Komfortgründen bezüglich der Luftqualität und zur Vermeidung von Schimmelbildungen. Eine Beheizung des Gebäudes mittels einer Wärmepumpe, die die Restwärme der Abluft nützt, ist in diesem Fall aber nicht mehr ausreichend, da der Luftstrom nicht beliebig erhöht werden kann, um eine ausreichende Wärmemenge aufzubringen. Es ist daher eine zusätzliche Heizungsanlage erforderlich, die meist als Flächenheizung, insbesondere Fußbodenheizung oder Wandheizung, ausgeführt ist.

Als Wärmequellen für Heizungsanlagen von Niedrigenergiehäusern sind Wärmepumpen bekannt, die die Erdwärme ausnutzen. Durch den Verdampfer-Wärmetauscher der Wärmepumpe verläuft hierbei ein Wärmeträgermedium-Kreislauf, in dem eine Umwälzpumpe angeordnet ist und der weiters durch einen Erdwärmetauscher verläuft. Solche Erdwärmetauscher können als Flächenkollektoren, die sich flächig in relativ geringer Tiefe ausdehnen, oder als Erdsonden ausgebildet sein, die punktuell an mehreren Stellen in Tiefen bis zu 30 bis 50 m verlaufen.

Aufgabe der Erfindung ist es eine Einrichtung der eingangs genannten Art bereitzustellen, die erweiterte Anwendungsmöglichkeiten aufweist. Erfindungsgemäß gelingt dies durch eine Einrichtung mit den Merkmalen des Anspruchs 1.

Durch die Verknüpfung des Wärmeträgermedium-Kreislaufs einerseits mit der Wärmepumpe, andererseits mit der Zuluft für die Belüftung werden wesentliche Vorteile erreicht. Es kann die mögliche Heizleistung der Wärmepumpe erhöht werden, so dass die Einrichtung auch bei Gebäuden, die nicht bzw. nicht ganz den Passivhausstandard erreichen, eingesetzt werden kann. Gerade bei Gebäuden, die nicht sehr weit vom Passivhausstandard entfernt sind, beispielsweise einen Wärmebedarf von weniger als 40 oder 30 kWh/m²a aufweisen, kann mit einem relativ kleinen und kostengünstigen Erdwärmetauscher für den Wärmeträgermedium-Kreislauf das Auslangen gefunden werden. Günstigerweise kann ein Erdwärmetauscher mit einer Leitungslänge im Bereich von 100 m bis 200 m eingesetzt werden. Ein solcher Erdwärmetauscher kann auch bei der Errichtung des Gebäudes kostengünstig in der Baugrube verlegt werden, beispielsweise in mehreren Schleifen in unterschiedlichen Tiefen im Erdreich.

Weiters kann bei einer erfindungsgemäßen Einrichtung im Sommerbetrieb eine effektive Kühlung der Zuluft und somit des Gebäudes erreicht werden. Hierfür wird die Wärmepumpe nicht benötigt und lediglich die Ventilatoren der Lüftung und die Umwälzpumpe des Wärmeträgermedium-Kreislaufs müssen betrieben werden. Wenn im Sommerbetrieb ein Heizbedarf zum Aufheizen von Warmwasser besteht, so wird beim Durchlaufen des Vor-Wärmetauschers die Temperatur des Wärmeträgermediums angehoben, wodurch die Effizienz der Wärmepumpe erhöht wird. Wenn im Sommerbetrieb die Wärmepumpe ausgeschalten ist, und die Zuluft gekühlt wird (= "Kühlbetrieb") so wird durch die Erwärmung des Wärmeträgermediums im Vor-Wärmetauscher die Temperatur des Erdreichs angehoben, was für den nächsten Winterbetrieb vorteilhaft ist.

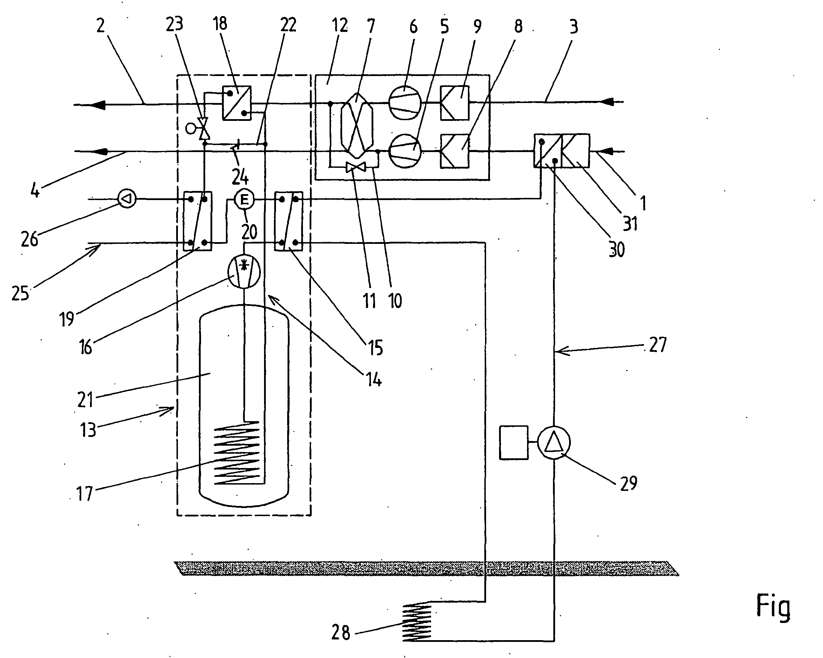

Weitere Vorteile und Einzelheiten der Erfindung werden im Folgenden anhand der beiliegenden Zeichnung erläutert. In dieser zeigt die einzige Fig. eine schematische, symbolhafte Darstellung einer Ausführungsform der Erfindung.

Die in der Fig. dargestellte Einrichtung gemäß der Erfindung umfasst eine Zuluftleitung 1, 2. Ein Zuluft-Ventilator 5 fördert Außenluft in den Abschnitt 1 der Zuluftleitung und nach dem Durchströmen des einen Kanals des Luft-Wärmetauschers 7 gelangt die Zuluft in den Abschnitt 2 der Zuluftleitung und von dort ins (in der Fig. nicht dargestellte) Gebäude. Eine Abluftleitung weist die vor und nach dem Luft-Wärmetauschers 7 gelegenen Abschnitte 3, 4 auf, wobei Abluft aus dem Gebäude durch die Abluftleitung 3, 4 vom Abluft-Ventilator 6 gefördert wird. Wenn die aus dem Gebäude geförderte Abluft, die durch den anderen Kanal des Luft-Wärmetauschers 7 tritt, wärmer ist als die geförderte Außenluft, so geht Wärme von der Abluft auf die Zuluft über, so dass in der Heizperiode Wärmeverluste durch die Belüftung des Gebäudes minimiert werden.

Den Ventilatoren 5, 6 sind in üblicher Weise Filter 8, 9 vorgeschaltet.

Es ist weiters in ebenfalls üblicher Weise eine Bypassleitung 10 für den Luft-Wärmetauscher 7 vorhanden, über welche im gezeigten Fall die Zuluft, denkbar und möglich wäre dies auch für die Abluft, am Luft-Wärmetauscher 7 vorbeigeführt wird. Zur Aktivierung des Bypasses ist in der Fig. nur schematisch ein Bypass-Ventil 11 in der Bypass-Leitung 10 angedeutet.

Denkbar und möglich wäre es auch, nur einen Teil der gesamten Zuluft (bzw. Abluft) durch den Luft-Wärmetauscher 7 zu führen ist und den anderen Teil durch die Bypass-Leitung 10, wobei das Verhältnis dieser Anteile regelbar ist.

Der Luft-Wärmetauscher 7 mit dem Bypass 10, 11, die Ventilatoren 5, 6 und die Filter 8, 9 bilden eine Lüftereinheit 12 und können in einem gemeinsamen Gehäuse angeordnet sein.

Die Einrichtung umfasst weiters eine Wärmepumpe 13, deren Aggregate, die in einem gemeinsamen Gehäuse angeordnet sein können, in der Fig. durch eine strichlierte Linie umgeben sind. Die Wärmepumpe 13 umfasst einen Kältemittelkreislauf 14. Dieser verläuft durch den einen Kanal eines Verdampfer-Wärmetauschers 15, der den Verdampfer der Wärmepumpe bildet, durch den Kompressor bzw. Verdichter 16, durch die einen Kanäle der Kondensator-Wärmetauscher 17, 18, 19, die Kondensatoren der Wärmepumpe bilden, und durch das Expansionsventil 20.

Im Verdampfer-Wärmetauscher 15 wird vom Kältemittel Wärme eines Wärmeträgermediums aufgenommen, dessen Kreislauf weiter unten noch genauer erläutert wird, wobei das Kältemittel verdampft. Das vom Verdichter 16 verdichtete Kältemittel verläuft im gezeigten Ausführungsbeispiel zunächst durch einen ersten Kondensator-Wärmetauscher 17, der von einer in einem Boiler 21 zur Bereitstellung von Warmwasser angeordneten Heizschlange gebildet wird. In der Folge tritt das Kältemittel im gezeigten Ausführungsbeispiel durch den einen Kanal eines zweiten Kondensator-Wärmetauschers 18, durch dessen anderen Kanal die Zuluft nach ihrem Durchtritt durch den Luft-Wärmetauscher 7 geführt ist. Es kann hierbei eine Nacherwärmung der Zuluft durchgeführt werden, wobei ein Teil der erforderlichen maximalen Heizleistung für das Gebäude aufgebracht wird. Wenn im Sommerbetrieb keine Heizung des Gebäudes erforderlich ist (eine Aufheizung von Wasser im Boiler 21 aber schon), so kann das Kältemittel durch die Bypass-Leitung 22 am Kondensator-Wärmetauscher 18 vorbeigeführt werden. Hierfür kann ein Motorventil 23 in der zum Kondensator-Wärmetauscher 18 führenden oder vom Kondensator-Wärmetauscher 18 wegführenden Leitung geschlossen werden, so dass ein federbelastetes Rückschlagventil 24 in der Bypass-Leitung 22 öffnet.

Im gezeigten Ausführungsbeispiel ist das Kältemittel in der Folge durch den einen Kanal eines dritten Kondensator-Wärmetauschers 19 geführt, durch dessen anderen Kanal ein Heizkreis 25 verläuft. Durch diesen Heizkreis 25 wird ein Heizmedium mittel einer Umwälzpumpe 26 gefördert. Dadurch kann eine Gebäudeheizung, vorzugsweise eine Flächenheizung, z.B. Fußboden-oder Wandheizung, betrieben werden. Im Sommerbetrieb, wenn keine Gebäudeheizung erforderlich ist, wird die Umwälzpumpe 26 ausgeschaltet.

Beispielsweise kann vom Kondensator-Wärmetauscher 18 die Temperatur der Zuluft auf 40° C angehoben werden und vom Kondensator-Wärmetauscher 19 die Temperatur des Heizmediums ebenfalls auf eine Temperatur im Bereich zwischen 35° bis 40°C angehoben werden.

Im Kondensator-Wärmetauscher 17 kann beispielsweise Kältemittel bis zu einer Temperatur des aufzuheizenden Wassers von 45° C kondensieren. Bei höheren Temperaturen erfolgt zwar keine Kondensation des Kältemittels mehr aber das Kältemittel kann von einem zuvor vorliegenden höheren Temperaturniveau unter Energieabgabe bis (nahezu) zur Wassertemperatur abgekühlt werden.

Wenn keine Zulufterwärmung gewünscht ist, so könnte der Kondensator-Wärmetauscher 18 auch entfallen. Falls keine Wassererwärmung gewünscht ist, so könnte der Kondensator-Wärmetauscher 17 auch entfallen.

Denkbar und möglich, obwohl weniger bevorzugt, wäre es auch, einen Puffer-Wärmespeicher einzusetzen, in welchem ein Speichermedium vorhanden ist und der günstigerweise auch einen Boiler umfasst. In diesem Puffer-Wärmespeicher wäre der oder einer der Kondensator-Wärmetauscher des Kältemittelkreislaufs angeordnet. Der Temperaturverlauf des Speichermediums in einem solchen Puffer-Wärmespeicher kann geschichtet sein. Auch ein Wärmetauscher eines Solarkreislaufs, der durch einen Sonnenkollektor führt, kann in einen solchen Puffer-Wärmespeicher eingebunden werden. Das Speichermedium des Puffer-Wärmespeichers kann im Bereich der gewünschten Temperatur entnommen werden, um als Heizmedium zur Durchführung durch einen Heizkreis zu dienen. Weiters kann auch Speichermedium entnommen werden, um durch einen im Abschnitt 2 der Zuluftleitung angeordneten Wärmetauscher durchgeführt zu werden, mittels welchem die Zuluft nacherwärmt werden kann. Statt dessen kann in der bereits beschriebenen Weise ein eigener Kondensator-Wärmetauscher 18 des Kältemittelkreislaufs zur Erwärmung der Zuluft vorhanden sein.

Die Einrichtung umfasst weiters einen Wärmeträgermedium-Kreislauf 27 für ein Wärmeträgermedium. Dieser Wärmeträgermedium-Kreislauf 27 verläuft durch einen Erdwärmetauscher 28, der im Erdreich angeordnet ist und dessen Leitungslänge vorzugsweise im Bereich zwischen 100 und 200 m liegt. Das Wärmeträgermedium wird durch den Wärmeträgermedium-Kreislauf 27 von einer Umwälzpumpe 29 gefördert. Der Wärmeträgermedium-Kreislauf verläuft weiters durch den einen Kanal eines Vor-Wärmetauschers 30, durch dessen anderen Kanal die Zuluft vor ihrem Durchtritt durch den Luft-Wärmetauscher 7 gefördert ist. Dem Vor-Wärmetauscher 30 kann hierbei nach ein Filter 31 für die Zuluft vorgeschaltet sein, wie dies in der Fig. dargestellt ist.

Der Wärmeträgermedium-Kreislauf 27 verläuft weiters durch den anderen Kanal des Verdampfer-Wärmetauschers 15, durch dessen einen Kanal der Kältemittelkreislauf 14 verläuft.

Mit einer erfindungsgemäßen Einrichtung sind die im Folgenden beschriebenen Betriebsarten möglich:

Im Winterbetrieb, d.h. eine Heizung des Gebäudes ist erforderlich, sind neben den Ventilatoren 5, 6 die Umwälzpumpe 29 des Wärmeträgermedium-Kreislaufs 27 und der Verdichter 16 der Wärmepumpe in Betrieb. Ebenso läuft die Umwälzpumpe 26 des Heizkreises 25, wenn von diesem eine Heizleistung aufzubringen ist. Das Wärmeträgermedium, welches nach Durchlaufen des Erdwärmetauschers 28 eine Temperatur von mindesten 0° C aufweist, hebt die Temperatur der Zuluft, wenn die Außenluft einen demgegenüber niedrigeren Wert aufweist, im Vor-Wärmetauscher 30 auf eine Temperatur von mindestens minus 3° C oder mehr an, wodurch ein Vereisen des Luft-Wärmetauschers 7 verhindert wird.

In der Folge tritt das Wärmeträgermedium durch den Verdampfer-Wärmetauscher 15, wobei Wärme an das Kältemittel zur Verdampfung desselben übertragen wird.

Wenn im Winterbetrieb die Temperatur der Außenluft über der des Wärmeträgermediums liegt, so wird im Vor-Wärmetauscher 30 zwar eine Abkühlung der Zuluft bewirkt, wobei sich die Temperatur des Wärmeträgermediums aber anhebt und hierdurch die Effektivität der Wärmepumpe gesteigert wird, so dass es nur zu einem vernachlässigbar kleinen ingesamten Energieverlust kommt.

Im Sommerbetrieb, wenn eine Kühlung des Gebäudes gewünscht ist, sind im gezeigten Ausführungsbeispiel zwei Betriebsfälle möglich, je nachdem ob eine Heizleistung zur Erwärmung des Warmwasser benötigt wird oder nicht. In beiden Fällen ist neben den Ventilatoren 5, 6 auch die Umwälzpumpe 29 für das Wärmeträgermedium eingeschaltet. Die Umwälzpumpe 26 für das Heizmedium ist stillgesetzt.

Wenn Warmwasser erwärmt werden soll, so ist auch der Verdichter 16 in Betrieb. Der Kondensator-Wärmetauscher 18 wird über die Bypass-Leitung 22 umgangen. Das aus dem Erdwärmetauscher 28 austretende Wärmeträgermedium weist beispielsweise eine Temperatur im Bereich von 5°bis 15° C (tendenziell zunehmend über den Sommer) auf und kühlt im Vor-Wärmetauscher 30 die Zuluft entsprechend ab, wenn die Außenluft eine demgegenüber höhere Temperatur aufweist. Hierbei wird das Wärmeträgermedium etwas erwärmt, so dass die Effizienz der Wärmepumpe 13, durch deren Verdampfer-Wärmetauscher 15 es im Folgenden tritt, erhöht wird.

Wenn keine Warmwasserbereitung erforderlich ist, so ist der Verdichter 16 ausgeschaltet. Das Wärmeträgermedium bewirkt wiederum eine effektive Kühlung der Zuluft, wenn die Außenluft eine höhere Temperatur als das aus dem Erdwärmetauscher 28 austretende Wärmeträgermedium aufweist. Durch die Erwärmung des Wärmeträgermediums im Vor-Wärmetauscher 30 wird hierbei weiters die Temperatur des Erdreichs im Bereich des Erdwärmetauschers 28 angehoben. Es wird dadurch das Erdreich für den nächsten Winterbetrieb "regeneriert". Ohne eine solche Regeneration könnte es je nach Bodenbeschaffenheit und Betriebsbedingungen der Einrichtung nicht zu einer vollständigen Erholung des Erdreichs bis zum nächsten Winterbetrieb kommen, wobei sich die Temperatur des Erdreichs im Bereich des Erdwärmetauschers 28 sukzessive absenkt und die Effizienz im Winterbetrieb dadurch mehr oder weniger verringert wird.

Im Sommerbetrieb, wenn eine Kühlung der Zuluft durchgeführt werden soll, wird weiters der Luft-Wärmetauscher 7 über den Bypass 10, 11 umgangen. Anderenfalls würde die Temperatur der Zuluft durch Wärmeübertragung von der Abluft angehoben.

Zur Verringerung der Kühlleistung kann die Förderleistung der Umwälzpumpe 29 des Wärmeträgermediums verringert werden, zu welchem Zweck eine entsprechende Regelung vorgesehen sein kann.

Zur Verringerung der Kühlung der Zuluft wäre es auch denkbar und möglich den Luft-Wärmetauscher 7 mehr oder weniger zu umgehen, d.h. je nach gewünschter Temperatur der Zuluft wird ein mehr oder weniger großer Teil der Zuluft (bzw. Abluft) durch die Bypass-Leitung 10 geführt.

Weiters wäre es denkbar und möglich, einen in der Fig. nicht dargestellten Bypass für den Vor-Wärmetauscher 30 vorzusehen, der auch je nach gewünschtem Grad der Kühlung der Zuluft mehr oder weniger aktiviert werden könnte.

### Legende

### zu den Hinweisziffern:

- 1: Abschnitt der Zuluftleitung
- 2: Abschnitt der Zuluftleitung
- 3: Abschnitt der Abluftleitung
- 4: Abschnitt der Abluftleitung
- 5: Zuluft-Ventilator
- 6: Abluft-Ventilator
- 7: Luft-Wärmetauscher
- 8: Filter
- 9: Filter
- 10: Bypass-Leitung
- 11: Bypass-Ventil
- 12: Lüftereinheit
- 13: Wärmepumpe
- 14: Kältemittelkreislauf
- 15: Verdampfer-Wärmetauscher
- 16: Verdichter
- 17: Kondensator-Wärmetauscher
- 18: Kondensator-Wärmetauscher
- 19: Kondensator-Wärmetauscher
- 20: Expansionsventil
- 21: Boiler
- 22: Bypass-Leitung
- 23: Motorventil
- 24: federbelastetes Rückschlagventil
- 25: Heizkreis
- 26: Umwälzpumpe
- 27: Wärmeträgermedium-Kreislauf
- 28: Erdwärmetauscher
- 29: Umwälzpumpe
- 30: Vor-Wärmetauscher
- 31: Filter

## Patentansprüche

1. Einrichtung zur Belüftung und Beheizung von Gebäuden, insbesondere Wohnhäusern, mit einem Zuluft- und einem Abluft-Ventilator (5, 6) zur Förderung der in das Gebäude einzubringenden Zuluft und der aus dem Gebäude abzuführenden Abluft, einem Luft-Wärmetauscher (7) zur Übertragung von Wärme von der Abluft auf die Zuluft und einer Wärmepumpe (13), die einen Kältemittelkreislauf (14) für ein Kältemittel aufweist, welcher einen Verdampfer-Wärmetauscher (15), der einen Verdampfer für das Kältemittel bildet, einen Verdichter (16), mindestens einen Kondensator-Wärmetauscher (17, 18, 19), der einen Kondensator für das Kältemittel bildet, und ein Expansionsventil (20) umfasst, **dadurch gekennzeichnet, dass** die Einrichtung weiters einen Wärmeträgermedium-Kreislauf (27) für ein Wärmeträgermedium aufweist, welches von einer Umwälzpumpe (29) durch den Wärmeträgermedium-Kreislauf (27) förderbar ist, wobei der Wärmeträgermedium-Kreislauf (27) durch einen Erdwärmetauscher (28) zur Übertragung von Erdwärme auf das Wärmeträgermedium und durch den Verdampfer-Wärmetauscher (15) der Wärmepumpe (13) zur Übertragung von Wärme vom Wärmeträgermedium auf das Kältemittel der Wärmepumpe (13) verläuft, und dass die Einrichtung weiters einen Vor-Wärmetauscher (30) aufweist, durch den einerseits ein in Strömungsrichtung gesehen vor dem Luft-Wärmetauscher (7) gelegener Abschnitt (1) der Zuluftleitung für die in das Gebäude einzubringende Zuluft und andererseits der Wärmeträgermedium-Kreislauf (27) verläuft.

2. Einrichtung nach Anspruch 1, **dadurch gekennzeichnet, dass** im Kältemittelkreislauf (14) der Wärmepumpe (13) zumindest ein Kondensator-Wärmetauscher (19) vorhanden ist, durch den zur Übertragung von Wärme vom Kältemittel auf ein Heizmedium weiters ein Heizkreis (25) verläuft, durch welchen das Heizmedium förderbar ist.

3. Einrichtung nach Anspruch 1 oder Anspruch 2, **dadurch gekennzeichnet, dass** im Kältemittelkreislauf (14) der Wärmepumpe (13) ein Kondensator-Wärmetauscher (18) vorhanden ist, durch den weiters ein in Strömungsrichtung gesehen nach dem Luft-Wärmetauscher (7) gelegener Abschnitt (2) der Zuluft-Leitung für die in das Gebäude einzubringende Zuluft zur Übertragung von Wärme vom Kältemittel auf die Zuluft verläuft.

4. Einrichtung nach Anspruch 3, **dadurch gekennzeichnet, dass** das Kältemittel oder die Zuluft durch eine Bypass-Leitung (22) an diesem Kondensator-Wärmetauscher (18) vorbeiführbar ist.

5. Einrichtung nach einem der Ansprüche 1 bis 4, **dadurch gekennzeichnet, dass** zur Bereitung von Warmwasser im Kältemittelkreislauf (14) der Wärmepumpe (13) ein Kondensator-Wärmetauscher (17) vorhanden ist, der in einem Boiler angeordnet ist.

6. Einrichtung nach einem der Ansprüche 1 bis 5, **dadurch gekennzeichnet, dass** mittels einer Bypass-Leitung (10) die Zuluft oder die Abluft am Luft-Wärmetauscher (7) vorbeiführbar ist.

7. Einrichtung nach einem der Ansprüche 1 bis 6, **dadurch gekennzeichnet, dass** die den Erdwärmetauscher bildende Leitung eine Länge im Bereich von 100 bis 200m aufweist.

## Claims

1. A means for ventilating and heating buildings, in particular residential buildings, with an intake-air fan and an exhaust-air fan (5, 6) for conveying the intake air to be introduced into the building and the exhaust air to be removed from the building, an air heat exchanger (7) for transmitting heat from the exhaust air to the intake air and a heat pump (13) which has a coolant circuit (14) for a coolant, which circuit comprises an evaporator/heat exchanger (15) which forms an evaporator for the coolant, a compressor (16), at least one condenser/heat exchanger (17, 18, 19) which forms a condenser for the coolant, and an expansion valve (20), **characterised in that** the means further has a heat-transfer-medium circuit (27) for a heat transfer medium which can be conveyed through the heat-transfer-medium circuit (27) by a circulating pump (29), the heat-transfer-medium circuit (27) extending through a ground-coupled heat exchanger (28) for transmitting ground heat to the heat transfer medium, and through the evaporator/heat exchanger (15) of the heat pump (13) for transmitting heat from the heat transfer medium to the coolant of the heat pump (13), and **in that** the means further has a preliminary heat exchanger (30) through which on one hand a section (1) of the intake-air line for the intake air which is to be introduced into the building located ahead, viewed in the direction of flow, of the air heat exchanger (7) and on the other hand the heat-exchange-medium circuit (27) extends.

2. A means according to Claim 1, **characterised in that** at least one condenser/heat exchanger (19) is present in the coolant circuit (14) of the heat pump (13), through which condenser/heat exchanger further a heating circuit (25) for transmitting heat from the coolant to a heating medium extends, through which circuit the heating medium can be conveyed.

3. A means according to Claim 1 or Claim 2, **characterised in that** a condenser/heat exchanger (18) is present in the coolant circuit (14) of the heat pump (13), through which condenser/heat exchanger further a section (2) of the intake-air line for the intake air which is to be introduced into the building located after, viewed in the direction of flow, the air heat exchanger (7) for transmitting heat from the coolant to the intake air extends.

4. A means according to Claim 3, **characterised in that** the coolant or the intake air can be made to bypass this condenser/heat exchanger (18) through a bypass line (22).

5. A means according to one of Claims 1 to 4, **characterised in that** a condenser/heat exchanger (17) is present for producing hot water in the coolant circuit (14) of the heat pump (13), which condenser/heat exchanger is arranged in a boiler.

6. A means according to one of Claims 1 to 5, **characterised in that** the intake air or the exhaust air can be made to bypass the air heat exchanger (7) by means of a bypass line (10).

7. A means according to one of Claims 1 to 6, **characterised in that** the line forming the ground-coupled heat exchanger has a length in the range from 100 to 200 m.

## Revendications

1. Dispositif de ventilation et de chauffage de bâtiments, en particulier de maisons d'habitation, avec un ventilateur d'air frais et un ventilateur d'air sortant (5, 6) pour l'alimentation en air frais du bâtiment et l'évacuation de l'air sortant en dehors du bâtiment, un échangeur thermique d'air (7) pour la transmission de la chaleur de l'air sortant à l'air frais et une pompe à chaleur (13) qui présente un circuit frigorifique (14) pour un réfrigérant, lequel comporte un échangeur thermique à évaporation (15) qui forme un évaporateur pour le réfrigérant, un compresseur (16), au moins un échangeur thermique à condensation (17, 18, 19) qui forme un condensateur pour le réfrigérant, et un détendeur (20), **caractérisé en ce que** le dispositif présente en outre un circuit (27) pour fluide caloporteur, lequel est susceptible d'être transporté par une pompe de recirculation (29) au travers du circuit de fluide caloporteur (27), sachant que le circuit de fluide caloporteur (27) traverse un échangeur de chaleur géothermique (28) pour la transmission de l'énergie géothermique au fluide caloporteur et traverse un échangeur thermique d'évaporation (15) de la pompe à chaleur (13) pour la transmission de la chaleur du fluide caloporteur au réfrigérant de la pompe à chaleur (13), et **en ce que** le dispositif comporte en outre un pré-échangeur thermique (30), par lequel s'étendent d'une part une section (1) placée, vue dans le sens d'écoulement, devant l'échangeur thermique d'air (7) de la conduite d'air frais pour l'air frais à introduire dans le bâtiment, et d'autre part le circuit de fluide caloporteur (27).

2. Dispositif selon la revendication 1, **caractérisé en ce qu'**au moins un échangeur thermique à condensation (19) est présent dans le circuit frigorifique (14) de la pompe à chaleur (13), par lequel un circuit de chauffage (25) pouvant transporter le fluide de chauffage, s'étend en outre pour la transmission de la chaleur du réfrigérant à un fluide de chauffage.

3. Dispositif selon la revendication 1 ou la revendication 2, **caractérisé en ce qu'**un échangeur thermique à condensation (18) est présent dans le circuit de frigorifique (14) de la pompe à chaleur (13), par lequel une section (2) placée, vue dans le sens d'écoulement, après l'échangeur thermique d'air (7) de la conduite d'air frais pour l'air frais à introduire dans le bâtiment s'étend pour la transmission de la chaleur du réfrigérant à l'air frais.

4. Dispositif selon la revendication 3, **caractérisé en ce que** le réfrigérant ou l'air frais peut être guidé par une conduite de dérivation (22) devant cet échangeur de chaleur à condensation (18).

5. Dispositif selon l'une quelconque des revendications 1 à 4, **caractérisé en ce qu'**un échangeur thermique à condensation (17) qui est disposé dans un chauffe-eau est présent pour la préparation d'eau chaude dans le circuit de réfrigérant (14) de la pompe à chaleur (13).

6. Dispositif selon l'une quelconque des revendications 1 à 5, **caractérisé en ce que** l'air frais ou l'air sortant peut être guidé devant l'échangeur thermique d'air (7) à l'aide d'une conduite de dérivation (10).

7. Dispositif selon l'une quelconque des revendications 1 à 6, **caractérisé en ce que** la conduite formant l'échangeur géothermique présente une longueur comprise entre 100 et 200 m.
